# EUROPEAN PATENT APPLICATION

(11) **EP 1 604 928 A1**
(43) Date of publication of application: **14.12.2005**
(21) Application number: 04076713.9
(22) Date of filing: 11.06.2004
(51) Int. Cl.: B65H 23/02

(54) **Functional surface for contoured film and method of use**

(71) Applicant: Solutia Europe N.V./S.A., 1050 Brussels (BE)
(72) Inventor: van Heule, Stefaan O.P., 9940 Evergem (BE)
(74) Representative: Colens, Alain M.G.M.

(57) **Abstract**

A functional surface for contoured film is disclosed comprising a half circular pivotable entrance part (6), a stationary part (7) and a half circular exit part (8) combined with an entrance bar (5) and an exit bar (9). The disclosure also relates to a method of using the surface, in particular for the relaxation of contoured film.

## Description

This invention pertains to a functional surface for contoured film and method of use. The technology is eminently suitable for the automatic treatment of shaped blanks. The surface in accordance with the invention comprises an entrance bar, provided with rotational means, a surface comprising a half circular pivotable entrance part attached to the entrance bar, a stationary part and a half circular pivotable exit part, attached to an exit bar provided with rotational means one of which being driven, the driving grip being provided by a nipping wheel. The surface is generally provided with multiple control means guiding e.g. the tension, speed and positioning of the contoured sheet.

Cut shaped blanks are generally used between e.g. two layers of glass for the manufacture of laminated windshields. To that effect, an originally straight web of an interlayer film, such as polyvinyl butyral interlayer, is processed into a curved web that fits the shape of the windshields. The manufacture, in particular the cutting and stacking, of such non-linear blanks is known to be difficult, chiefly because two opposite sides of the blanks are circular whereas the opposite cut sides are generally straight but not parallel. Known processing arrangements, to the extend they do not require manual adjustments, are possibly lacking with respect to prevailing requirements and, in addition, frequently can yield cut shaped blanks which can need further treatment, possibly trimming, before final lamination.

The prior art relating to the domain of the inventive technology is fairly crowded and well established. WO 99/15451 discloses a device for the automatic cutting and stacking of arcuately shaped blanks, said device consisting of a stationary feeding table, a cutting device and a stacking device. This technology can require moving means including of feeding wheels and pressure rollers, which means can negatively interfere with the evolution of the physical properties of the interlayer film during the processing. EP-A-0.685.316 pertains to a shaping unit for cut shaped blanks, embodying dual conical temperature regulated drums, followed by cutting the stretched sheet in a cooling and cutting station. WO 99/14145 concerns an interlayer treatment surface provided with a propulsion system for contoured film along a circular path in stable position whereby the surface is equipped with an adjustable propulsion disk and with a second adjustable steering mechanism. WO 01/62478 describes a linear interlayer relaxation treatment arrangement embodying, inter alia, an air-cushion table comprising a sheet tension catenary loop. The technology actually yields blanks that, for various reasons, require enhanced dimensional stability and uniformity. Contoured blanks, which have been chilled on the umbrella, can be submitted to relaxation in a stack configuration at ambient temperature for a period of frequently 24-48 hours. This technology can deserve improvement in the relaxation properties. In particular, non-uniform relaxation can occur depending upon the position of the blank in the stack. Non-uniform relaxation can also occur in the individual blanks. This treatment, in addition to possibly yielding non-uniform physical blank properties, can adversely affect the economics of the technology. The relaxation temperature of this technology is usually different from the lamination temperature and consequently can induce further shrinking and thus create a need for additional trimming.

It is a main object of this invention to make available processing and equipment technology for generating arcuately shaped interlayer film characterized by physically uniform properties. It is another object of this invention to manufacture shaped interlayer blanks which can subsequently be laminated without a need for further trimming adjustment. It is another object of this invention to provide an automatic processing arrangement capable of continuously manufacturing shaped blanks substantially ready for subsequent lamination. It is still another object of this invention to manufacture shaped blanks that are not subject to subsequent physical alterations. The foregoing and other objects can now be achieved by manufacturing contoured films by means of a functional surface in accordance with this invention.

The invention concerns a functional surface for contoured film comprising:
(a) an entrance bar **5** provided with rotational means and tension control means **4**;
(b) a surface comprising:
   - a half circular pivotable entrance part **6** attached to the entrance bar;
   - a stationary part **7** provided with control means **12, 13,;**
   - a half circular pivotable exit part **8;**
(c) an exit bar **9,** attached to the exit part, said exit bar being provided with rotational means, at least one of which means **9c** being driven and provided with a nipping wheel **10.**

In a preferred execution, the tension control means is represented by a catenary loop. The control means on the stationary part of the surface are position measurement means, e.g. light beam and reflection measurement, controlling the angular position of the pivotable entrance and exit parts. The invention also pertains to the use of the functional surface in accordance with the claims for the manufacture of a dimensionally stable shaped web, in particular for the relaxation of interlayer sheet.

The terms "interlayer sheet", polyvinyl butyral sheet" and "PVB sheet" are used, throughout the description and claims, interchangeably. While PVB is a well-known and widely used interlayer polymer material it is understood that polymeric materials, other than PVB, can also be used as interlayer material, possibly in combination with PVB. Interlayer sheets are used, for example, between glass layers for automotive and/or architectural application. The terms "relaxation table" and "air-cushion table" are also used interchangeably throughout the description and claims.

Figure **1** is a top view of the functional surface in accordance with the claimed subject matter.

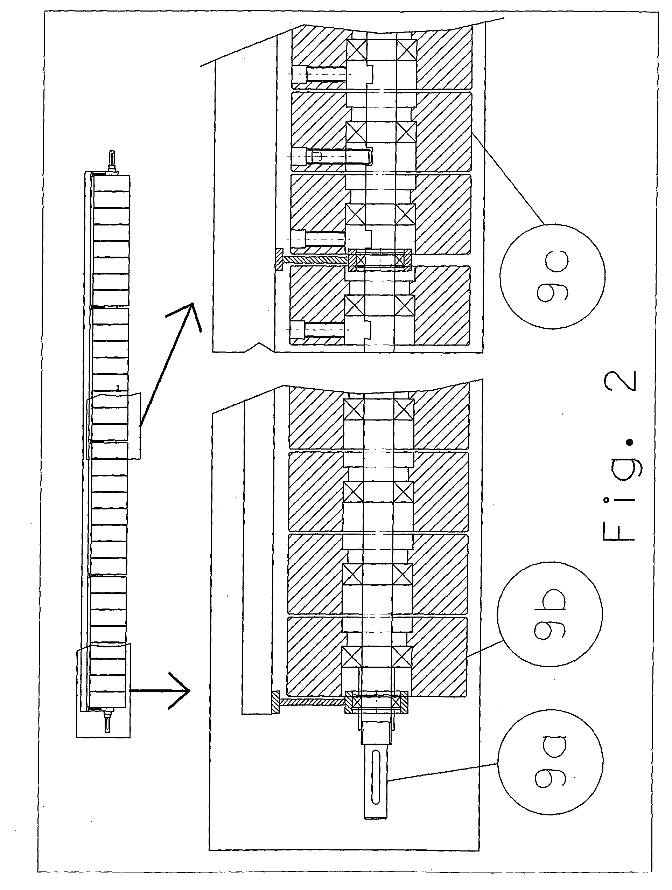

Figure **2** is a sectional view of the entrance and exit bars attached to the functional surface.

Figure **3** is a sectional view of the catenary loop located between the interlayer supply means and the entrance part of the pivotable functional surface.

Figure **4** is a sectional view of the functional surface.

Figure **5** is a top view of the functional surface representing a relaxation configuration.

The invention will be more clearly understood from the description below, including certain preferred embodiments. The functional surface can be used beneficially for the handling, including the treatment and the manufacture, of dimensionally stable shaped web.

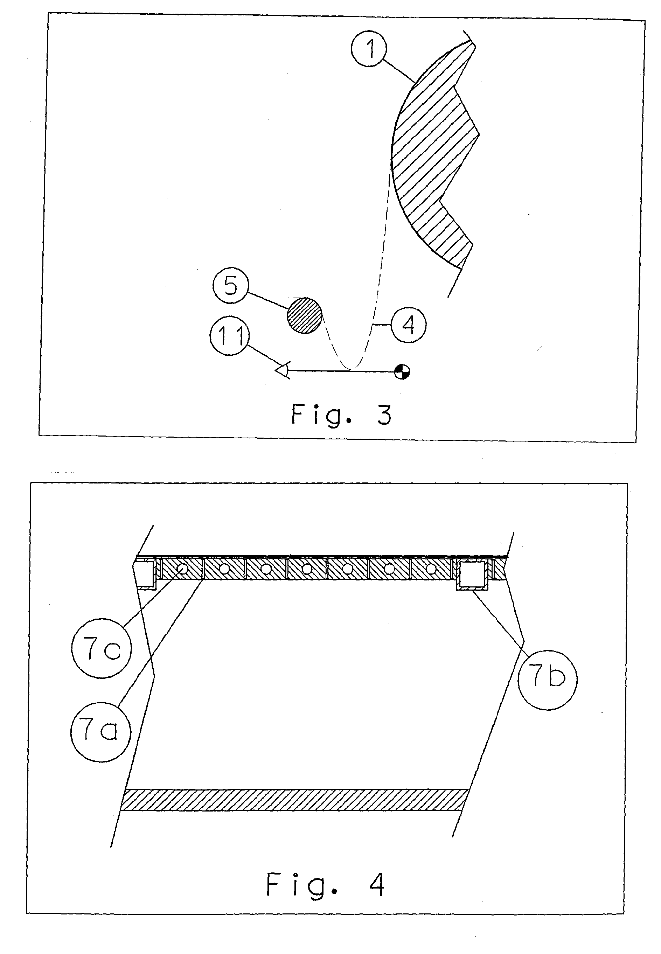

The functional surface comprises an entrance bar **5** provided with rotational means and tension control means **4.** The rotational means are usually represented by wheels, generally idler wheels. The surface of the wheels is routinely selected to induce effective grip of the wheel surface with the web surface to thus reduce/eliminate slippage. The wheel surface configuration can be optimized routinely to ensure sufficient grip. The tension control means can be represented by the depth measurement of a catenary loop. Figure **3** shows a sectional view of an execution of a catenary loop used to regulate the operation of the surface, in particular the feeding speed of the web and the transportation force coming from the web supply means **1.** The depth (position) measurement can be done by means of known technics including ultrasound and light. A preferred method concerns using a light beam **11.** The signal of the light beam measurement regulates the speed control of driven rotational means **9c** on exit bar **9.** The feeding temperature of the web entering the table is controlled on the supply means e.g. by heating or cooling in accordance with needs. As an example, the web can, preparatory to a relaxation treatment, be heated before entering the surface to a temperature in the range of from 50-75 °C, preferably of from 60-65 °C.

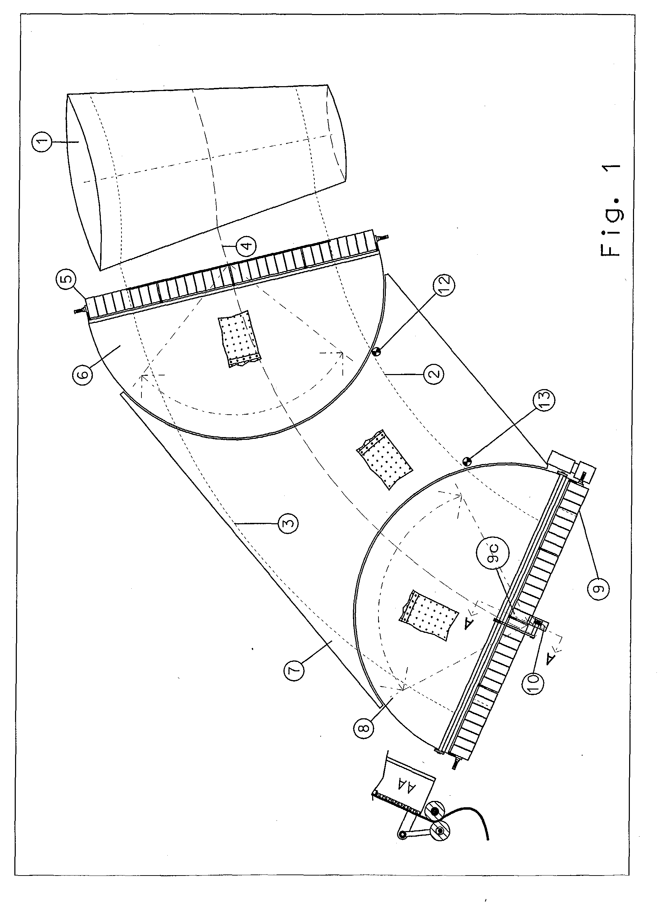

The functional surface comprises, as shown in Figure **1,** a half circular pivotable entrance part **6** attached to the entrance bar, a stationary part **7,** provided with control means **12, 13,** and a half circular pivotable exit part **8.** The circular pivotable entrance and exit parts can rotate around the middle (center) point of the circle situated on the entrance bar and exit bar respectively. The rotational movement of the pivotable parts is induced by known means such as a linear electrical motor. The stationary part **7** is provided with position measurement means for the web. As an example, light beams and reflexion measurements can be used to keep the web on a predetermined arcuate track. The position measurements on the stationary part of the surface translate into angular adjustments of the pivotable table parts along the lines of the predetermined track. The exit bar **9,** attached to the half circular pivotable exit part of the surface, is provided, similar to the entrance bar, with rotational means except that one of such rotational means **9c,** usually wheels, is driven and shall thus be mechanically attached to (locked onto) the driven shaft. This driven wheel, combined with nipping wheel **10** pulls the web at a speed determined by the catenary loop measurements.

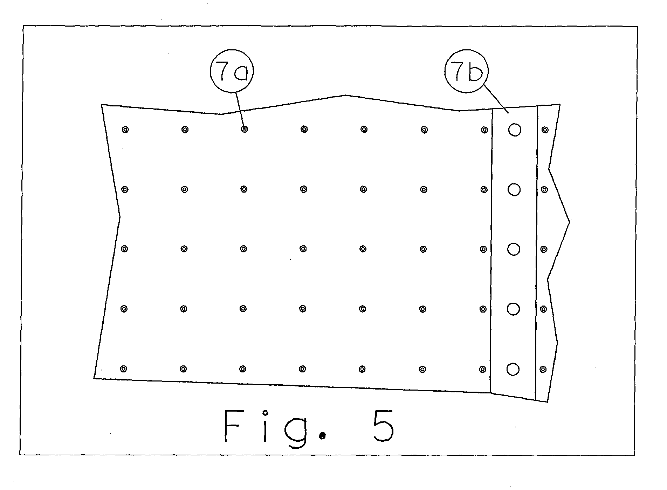

The functional surface of this invention can generally and preferably be used to enable superior relaxation to arcuately shaped webs by means of effective temperature control on a substantially free-floating web. The residual shrinking level of the web can actually be reduced to levels below 0.5 %, measured on a blank on an air cushion surface, as e.g. in Figure **5,** at 30 °C after 100 hours. State of the art technologies lead to a shrink, measured under identical conditions, of 1.5-2.5 %.

A sectional view of the top surface of an air cushion configuration of the surface is shown in Figure **4.** The top surface is usually represented by a metal plate having a thickness of from 15 to 50, preferably from 20 to 40 mm (millimeters). The choice of the metal shall of course take into consideration its heat transfer properties. Aluminum and aluminum alloys can represent suitable species as well as many other metal and alloys routinely available and known to be suitable for that very purpose. The top surface is provided with an adequate number of air nozzles 7a per square meter to provide a layer of air between the surface and the interlayer moving over it. The number of holes per square meter is, for web relaxation purposes, usually in the range of from 400 to 3000, in one preferred execution of from 800 to 1800. The holes are of substantially cylindrical configuration with slightly broken edges, e.g. having an angle in the range of from 30° to 50°, in one execution 45°, at the top surface and bottom surface of the holes. The top surface is also provided with de-airing channels **7b** which allow for the uniform evacuation of the supporting air to thus accommodate and promote the flatness of the sheet relaxing on the surface/air cushion. The de-airing channels can be dimensioned routinely. In one preferred execution, the de-airing channel is connected to the air cushion layer by means of a row of drilled holes dimensioned in relation to the number of air nozzles to thus allow for a substantially equal pressure loss from air nozzle to air cushion layer as compared to the pressure loss from the air cushion layer to the de-airing channel.

The top surface is, for a preferred relaxation treatment execution, provided with embedded cooling channels **7c.** These channels can greatly improve heat transfer properties and the attached relaxation of the moving web. The cooling can be secured in a known manner e.g. by circulating brine through the channels. The surface in accordance with this invention can also be used as an efficient contact cooling surface.

Figure **5** represents a top view of the functional surface representing a relaxation configuration. The air nozzles **7a** are as described above. The same applies to de-airing channel **7b.**

A typical web relaxation method is shown to illustrate the actual operation of the functional surface. The web is, before entering the surface, heated to a temperature in the range of from 50 -75 °C, preferably of from 60-65 °C. In one execution, the heating of the web is applied before entering the surface coming from web supply means **1,** for example a shaping line routinely provided with conventional heating means. During the passage of the web over the entire functional surface, the volume of air supplied through the nozzles to the air cushion, between the top of the functional surface and the moving web, is regulated to yield a pressure sufficient to keep the web in a substantially floating position. As an example, the static pressure of the air in between the surface and the moving web is equal to the weight of the web per unit surface. In this specific example as given in the description in combination with Figure **4,** the static pressure underneath the functional surface (nozzles) is about 25-50 Pa more than the static pressure in the air cushion layer. The temperature of the web will, during the movement over the surface, decrease to a range of from about 40-25 °C, preferably 30-35 °C, measured at the time the web leaves the surface. The dimensions of the functional surface are generally selected considering relevant parameters including e.g. line speed, physical properties of the web etc. Such selections and optimizations are day-to-day undertakings and can be handled routinely in accordance with needs. In one specific execution, the length of the functional surface can be of from 1.5-3 meters, preferably of from 2-2.6 meters.

## Claims

1. Functional surface for contoured film comprising:
(a) an entrance bar (**5**) provided with rotational means and tension control means **(4);**
(b) a surface comprising:
- a half circular pivotable entrance part **6** attached to the entrance bar;
- a stationary part (**7**) provided with control means (**12**), **13**;
- a half circular pivotable exit part (**8**);
(c) an exit bar (**9**), attached to the exit part, said exit bar being provided with rotational means, at least, one of which means (**9c**) being driven and provided with a nipping wheel (**10**).

2. The functional surface in accordance with Claim 1 wherein the entrance bar and the exit bar comprise shaft (**9a**) and idler rolls (**9b**) one of which, **(9c)** attached to the exit bar, is locked onto the shaft.

3. The functional surface in accordance with Claim 1 wherein the tension control means is represented by a catenary loop (**4**).

4. The functional surface in accordance with Claim 1 which is an air-cushion table (**6, 7, 8**)that is provided with deairing channels (**7b**), embedded tubular cooling means (**7c**) and air nozzles (**7a**).

5. The functional surface in accordance with Claim 1 wherein the control means on the stationary part are position measurement means controlling the angular position of the pivotable entrance and exit parts.

6. The functional surface in accordance with Claim 1 wherein the speed of the locked rotational means (**9c**) is controlled by the setting of the catenary loop.

7. Use of the functional surface in accordance with Claims 1-6 for the relaxation of interlayer sheet comprising:
(a) heating the sheet before entering the surface to a temperature in the range of from 50-75 °C;
(b) maintaining during the passage of the sheet over the entire functional surface an air pressure sufficient to keep the sheet in a substantially floating position; and
(c) adjusting the speed of the sheet to a temperature in the range of from 40-25 °C at the time it leaves the surface.

8. The use in accordance with Claim 7 is heated, before entering the surface to a temperature in the range of from 60-65 °C and wherein the sheet has a temperature in the range of from 30-35 °C upon leaving the surface.

9. The use in accordance with Claim 7 wherein the static pressure underneath the functional surface (nozzles) is about 25-50 Pa more than the static pressure in the air cushion layer.

10. The use in accordance with any one of Claims 7-9 wherein the sheet is represented by a polyvinyl butyral interlayer sheet.
